# EUROPEAN PATENT APPLICATION

(11) **EP 3 952 386 A1**
(43) Date of publication of application: **09.02.2022**
(21) Application number: 19921721.7
(22) Date of filing: 28.03.2019
(51) Int. Cl.: H04W 16/26, H04W 56/00, H04W 92/20

(54) **WIRELESS NODE AND WIRELESS COMMUNICATION CONTROL METHOD**

(71) Applicant: NTT DOCOMO, INC., Chiyoda-Ku Tokyo 100-6150 (JP)
(72) Inventor: HARADA, Hiroki, Tokyo 100-6150 (JP); KURITA, Daisuke, Tokyo 100-6150 (JP)
(74) Representative: Hoffmann Eitle
(86) International application number: PCT/JP2019/013842
(87) International publication number: WO 2020/194733

(57) **Abstract**

A radio node includes a control section that configures a parameter related to a transmission timing for a synchronization signal block based on units of second time period, the synchronization signal block being transmitted in accordance with a transmission periodicity in the second time period different in length from a first time period, and a transmission section that transmits the parameter configured.

## Description

### Technical Field

The present disclosure relates to a radio node and a radio communication control method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), New Radio Access Technology (New-RAT), New Radio (NR), and the like.

For future radio communication systems (e.g., 5G), a technique of Integrated Access and Backhaul (IAB) that integrates an access link and a backhaul (BH) link has been studied (Non-Patent Literature (hereinafter referred to as "NPL") 1). An IAB node, which is one example of a radio node, forms a radio access link with a User Equipment (UE), and also forms a wireless BH link with another IAB node and/or a radio base station.

### Citation List

### Non-Patent Literature

NPL 1

### Summary of Invention

### Technical Problem

Configuration for transmission of a Synchronization Signal/Physical Broadcast CHannel Block(SS/PBCH Block, or SSB), which is one example of a synchronization signal block, for a radio node has not been studied comprehensively.

An object of one aspect of the present disclosure is to provide a technique for appropriately performing configuration for the transmission of the synchronization signal block for the IAB node.

### Solution to Problem

A radio node according to one aspect of the present disclosure includes: a control section that configures a parameter related to a transmission timing for a synchronization signal block based on units of second time period, the synchronization signal block being transmitted in accordance with a transmission periodicity in the second time period different in length from a first time period; and a transmission section that transmits the parameter configured.

### Advantageous Effects of Invention

According to the present disclosure, it is possible to appropriately perform configuration for the transmission of the synchronization signal block for the radio node.

### Brief Description of Drawings

FIG. 1 illustrates an example of a configuration of a radio communication system according to an embodiment of the present disclosure;
FIG. 2 illustrates a configuration example of IAB nodes according to the present embodiment;
FIG. 3 is an explanatory view for explaining SSB based RRM Measurement Timing Configuration (SMTC);
FIG. 4 illustrates one example of a parameter for collective notification of an SSB transmission periodicity and an SSB transmission timing in an SSB transmission configuration for the IAB node according to the present embodiment;
FIG. 5 illustrates one example of a parameter for separate notification of the SSB transmission periodicity and the SSB transmission timing in the SSB transmission configuration for the IAB node according to the present embodiment; and
FIG. 6 illustrates an example of a hardware configuration of the IAB node and a user equipment according to the present disclosure.

### Description of Embodiments

Hereinafter, an embodiment of the present disclosure will be described with reference to the accompanying drawings.

### (Present Embodiment)

### <System Configuration>

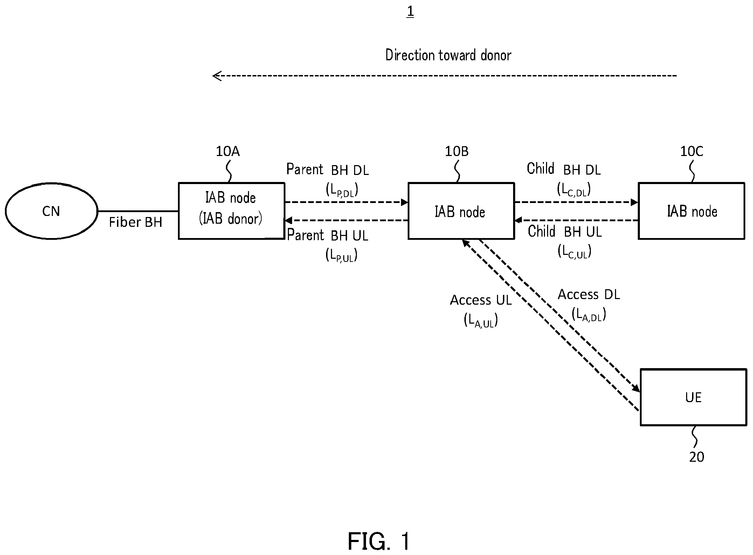

FIG. 1 illustrates an example of a configuration of a radio communication system according to an embodiment of the present disclosure.

Radio communication system 1 includes a plurality of IAB nodes 10A to 10C as one example of radio nodes, and UE 20 as one example of a user equipment. Hereinafter, to describe IAB nodes 10A to 10C without distinguishing them from one another, only the numeral common to the reference signs may be used as in "IAB nodes 10."

IAB nodes 10A to 10C are connected to one another by radio communication. As illustrated in FIG. 1, IAB node 10B is connected to IAB node 10A and IAB node 10C. Paying attention to the relationship between IAB node 10A and IAB node 10B, IAB node 10A is the first node upstream of IAB node 10B. In other words, IAB node 10B is the first node downstream of IAB node 10A. Thus, IAB node 10A may be called the parent IAB node for IAB node 10B, and IAB node 10B may be called the child IAB node for IAB node 10A. Here, "downstream" means the direction away from an IAB donor and "upstream" means the direction nearer the IAB donor.

Each of IAB nodes 10A to 10C forms a cell, which is an area in which the IAB node is available to perform radio communication. That is, each of IAB nodes 10 has a function as a base station. UE 20 in a cell is available to connect by radio to IAB node 10 forming the cell.

When IAB node 10A is the IAB donor, IAB node 10A is connected to a communication system such as a Core Network (CN) through a transmission/reception means such as a fiber BH. The fiber BH is not limited to an optical fiber, and may be any means capable of transmitting and receiving data. Note also that, the transmission/reception means between IAB node 10A and the core network or the like may be a means using high-capacity radio. The number of IAB nodes 10 and the number of UEs 20 included in radio communication system 1 are not limited to the example of FIG. 1. For example, the number of parent IAB nodes 10A connected to IAB node 10B may be two or more. Further, the number of child IAB nodes 10C connected to IAB node 10B may be two or more. Furthermore, the number of UEs 20 connected to IAB node 10B may be two or more.

The letter "L" and its subscripts illustrated in FIG. 1 denote the following:
- "L_{P,DL}" denotes a Downlink (DL) from parent IAB node 10A to IAB node 10B;
- "L_{P,UL}" denotes a Uplink (UL) from IAB node 10B to parent IAB node 10A;
- "L_{C,DL}" denotes the DL from IAB node 10B to child IAB node 10C;
- "L_{C,UL}" denotes the UL from child IAB node 10C to IAB node 10B;
- "L_{A,DL}" denotes the DL from IAB node 10B to UE 20; and
- "L_{A,UL}" denotes the UL from UE 20 to IAB node 10B.

L_{A,DL} and/or L_{A,UL} are referred to as access links. L_{P,DL}, L_{P,UL}, L_{C,DL}, and/or L_{C,UL} are referred to as BH links.

### <IAB Node>

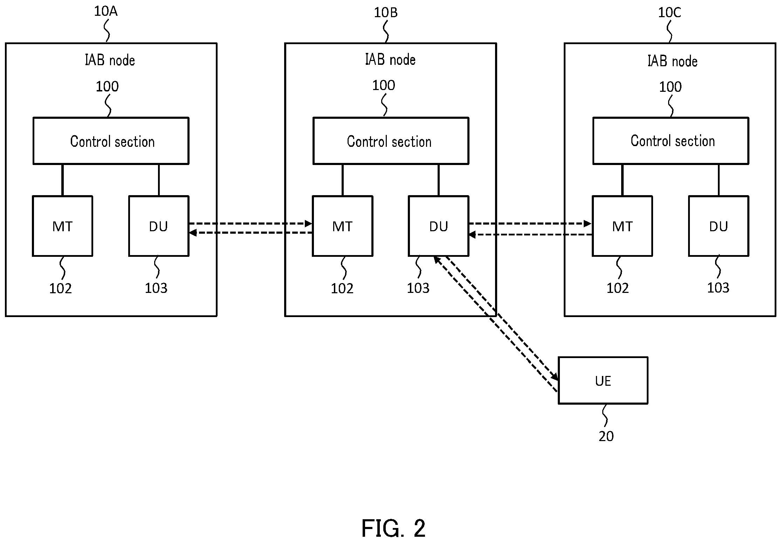

FIG. 2 illustrates a configuration example of IAB nodes according to the present embodiment.

As illustrated in FIG. 2, each of IAB nodes 10 includes control section 100, Mobile Termination (MT) 102, and Distributed Unit (DU) 103. MT 102 and DU 103 may be functional blocks. Hereinafter, a function of MT 102 may be expressed as "MT" without the reference sign, and a function of DU 103 may be expressed as "DU" without the reference sign. DU 103 may have functions corresponding to those of the base station. DU 103 may also have functions corresponding to those of an extension station of a base station including the extension station for radio processing and an aggregation station for performing processing other than radio processing. One example of MT 102 may have functions corresponding to those of the user equipment.

MT 102 of IAB node 10B controls the BH link to parent IAB node 10A (hereinafter referred to as "parent link"). DU 103 of IAB node 10B controls the BH link to child IAB node 10C and/or the access link to UE 20. Hereinafter, the BH link to child IAB node 10C and/or the access link to UE 20 are referred to as "child links."

Control section 100 controls MT 102 and DU 103. Operation of IAB node 10 described below may be implemented by control section 100 controlling MT 102 and DU 103. Control section 100 may also be provided with a storage section for storing therein a variety of information. MT 102 of IAB node 10B is one example of a reception section that receives a signal from DU 103 of IAB node 10A, and is one example of a transmission section that transmits a signal to DU 103 of IAB node 10A. DU 103 of IAB node 10B is one example of a transmission section that transmits a signal to UE 20 and/or MT 102 of IAB node 10C, and one example of a reception section that receives a signal from UE 20 and/or MT 102 of IAB node 10C.

A half-duplex constraint may be applied between the parent link and each of the child links. To realize the half-duplex constraint, Time Division Multiplexing (TDM) may be applied to the parent link and the child link. In this case, either the parent link or the child link may be available to utilize time resources. The application of TDM is one example, and Frequency Division Multiplexing (FDM) or Space Division Multiplexing (SDM) may, for example, be applied.

Time resources on the parent link (hereinafter referred to as "MT resources") are configured to one of the following types:
- An MT resource to which a DL type is configured (hereinafter referred to as "MT-D") is used as L_{P,DL}.
- An MT resource to which a UL type is configured (hereinafter referred to as "MT-U") is used as L_{P,UL}.
- An MT resource to which a Flexible (FL) Type is configured (hereinafter referred to as "MT-F") is used as L_{P,DL} or L_{P,UL},

The MT resources may be replaced by another expression such as resources used for communication with parent IAB node 10A, resources used for communication with parent IAB node 10A over the backhaul link, or resources used for communication with a serving cell. The MT resources may also be one example of resources in a first radio section.

Time resources on the child link (hereinafter referred to as "DU resources") are configured to one of the following types:
- A DU resource to which the DL type is configured (hereinafter referred to as "DUD") may be used as L_{C,DL} or L_{A,DL}.
- A DU resource to which the UL type is configured (hereinafter referred to as "DU-U") may be used as L_{C,UL} or L_{A,UL}.
- A DU resource to which the FL type is configured (hereinafter referred to as "DU-F") may be used as L_{C,DL}, L_{C,UL}, L_{A,DL}, or L_{A,UL}.
- A DU resource to which a Not-Available (NA) type is configured (hereinafter referred to as "DU-NA") is not used for the child links.

The DU resources may be replaced by another expression such as resources used for communication with child IAB node 10C and/or UE 20, or resources used for communication with child IAB node 10C over the backhaul link and/or with UE 20 over the access link. The DU resources may also be one example of resources in a second radio section.

Further, one of the following types is configured for DU-D, DU-U, and DU-F.
- A DU resource to which a Hard type is configured is used for the child link but not for the parent link. Hereafter, the DU resource to which the Hard type is configured may be referred to as "DU(H)."
- Explicit and/or implicit indication from parent IAB node 10A determines whether or not a DU resource to which a Soft type is configured is available for the child link (hereinafter referred to as "Availability"). Hereafter, the DU resource to which the Soft type is configured may be referred to as "DU(S)."

The configuration of DL, UL, FL, and NA and the configuration of Soft and Hard for the DU resources may also be semi-statically performed. For example, these configurations for the DU may be configured by an RRC parameter. The "RRC" is an abbreviation for Radio Resource Control. The RRC parameter may be replaced by another term such as RRC signaling, RRC message, or RRC configuration. These configurations for the DU may also be configured by an F1-AP parameter. The F1-AP parameter may be replaced by another term such as F1-AP signaling or F1-AP message.

### <Study>

A study will be made on defining an SSB, which is one example of a synchronization signal block used for mutual discovery and measurement between IAB nodes 10, by an enhanced framework which is an existing SMTC framework as enhanced in the following points. The SMTC is a configuration for the base station to notify UE 20 of a measurement periodicity and timing for the SSB used by UE 20 for measurement.
- The maximum number max(N_{RX}) of SMTC windows available to be configured for the IAB node may be at least "3."
- Each of the SMTC windows is given an independent configuration (e.g., the periodicity, offset, and duration of the SMTC window).
- Introducing an SSB transmission configuration (STC) indicating a configuration for SSB transmission is studied for the IAB node. However, the details of the SSB transmission configuration for the IAB node have not yet been studied.

Abase station notifies UE 20 of the configuration related to the SSB transmission configuration of a serving cell by the following parameters (e.g., Information Elements (IEs)) in the parameter "ServingCellConfigCommon":
- Parameter "ssb-periodicityServingCell" indicating the SSB transmission periodicity;
- Parameter "ssb-PositionsInBurst" indicating an actually transmitted SSB index, for example, in the form of a bitmap; and
- Parameter "absoluteFrequencySSB" indicating an SSB frequency position.

As is understood from the above, an existing base station does not notify UE 20 of a parameter indicating an SSB transmission timing (for example, in which half frame the SSB is to be transmitted) and/or a parameter indicating SubCarrier Spacing (SCS) of the SSB. This is because the SSB of the serving cell is already detected by UE 20 before the UE receives the notification of the SSB transmission configuration. That is, even when UE 20 is not notified of the parameters indicating the SSB transmission timing and/or the SCS of the SSB, the UE can recognize these parameters.

In addition, the base station notifies UE 20 of the configuration of the serving cell for SSB measurement by the following parameters in the parameter "MeasObjectNR":
- Parameter "ssbFrequency" indicating the SSB frequency position of an SSB frequency to be measured;
- Parameter "ssbSubcarrierSpacing" indicating the SCS of the SSB to be measured;
- Parameter "smtc1" indicating the configuration of the first SMTC window;
- Parameter "periodicityAndOffset" indicating the periodicity and offset (e.g., granularity of 1 ms) of the first SMTC window;
- Parameter "duration" indicating the duration of the first SMTC window;
- Parameter "smtc2" indicating the configuration of the second SMTC window;
- Parameter "pci-List" indicating a list of cell IDs of target cells for measurement in the second SMTC window;
- Parameter "periodicity" indicating the periodicity of the second SMTC window;
- Parameter "ssb-ToMeasure" indicating, e.g., in the form of a bitmap, the SSB index of the SSB to be measured; and
- Parameter "cellsToAddModList" indicating a list of cell IDs of target cells for measurement.

However, as described above, the details of the SSB transmission configuration for the IAB node have not yet been studied.

For example, when the parameters related to the SSB transmission configuration of the serving cell as described above are reused for the SSB transmission configuration for the IAB node, information for determining how IAB node 10 performs SSB transmission is insufficient. For example, the aforementioned parameters related to the SSB transmission configuration of the serving cell are short of parameters for IAB node 10 to indicate the SSB transmission timing and/or to indicate the SCS of the SSB.

In addition, for example, when the parameters of the serving cell for SSB measurement described above are reused for the SSB transmission configuration for the IAB node, some of the parameters are not suitable for the SSB transmission configuration for the IAB node as will be described below.

For example, the parameter "periodicityAndOffset" of the serving cell for SSB measurement can specify the SSB measurement periodicity and the measurement start timing of 1 ms granularity. However, one SSB transmission for an IAB node is closed within a single half frame. Further, the SSB transmission timing within the half frame (e.g., an offset from the boundary of the half frame) is determined by the SSB index.

Thus, a problem may arise, for example, when the parameters (e.g., SMTC) of the serving cell for SSB measurement are reused for the SSB transmission configuration for the IAB node as they are. For example, suppose that the aforementioned parameter indicating the measurement start timing of 1 ms granularity is reused as a parameter indicating the SSB transmission timing of 1 ms granularity in the SSB transmission configuration for the IAB node. In this case, when the IAB node is notified, as the SSB transmission timing of 1 ms granularity, of a timing other than the boundary (e.g., 0 ms, 5 ms, 10 ms, and the like) of the half frame, it is unclear from the relationship between such a timing and the SSB index as to which timing the SSB transmission is to be performed.

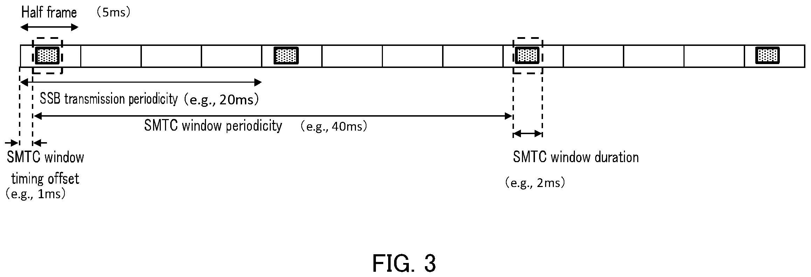

A further description will be given with reference to FIG. 3. FIG. 3 is an explanatory view for explaining the SMTC. FIG. 3 illustrates an example where the SSB transmission periodicity is 20 ms, the SMTC window duration is 2 ms, the SMTC window periodicity is 40 ms, and the SMTC window timing offset is 1 ms.

As illustrated in FIG. 3, when UE 20 is notified of an SMTC window timing offset of 1 ms, the UE measures SSBs for the SMTC window duration of "2 ms" from a timing that is offset by 1 ms from the boundary of the half frame.

On the other hand, when the above-described SMTC window timing offset is reused as the SSB transmission timing offset in the SSB transmission configuration for the IAB node as it is, the following problem may arise. The SSB transmission timing within the half frame (e.g., an offset from the half frame boundary) is determined by the SSB index as described above. Thus, when the IAB node is notified of the SSB transmission timing offset, there are two offsets from the boundary of the half frame, i.e., the SSB index and the SSB transmission timing offset. Accordingly, it is unclear at which timing SSB transmission is to be performed.

Therefore, a method of appropriately configuring the SSB transmission configuration for the IAB node will be described below.

### <SSB Transmission Configuration for IAB Node>

At least one of the following parameters is configurable for the SSB transmission configuration for the IAB node:
- Parameter indicating the SSB transmission periodicity;
- Parameter indicating the SSB frequency position;
- Parameter indicating the transmitted SSB index;
- Parameter indicating the SSB transmission timing (e.g., a parameter indicating an offset for SSB transmission timing in units of half frame); and
- Parameter indicating the SCS of the SSB.

The following parameters and notification method may be reused for the aforementioned parameters indicating the SSB frequency position, the transmitted SSB index, and the SCS of the SSB, and the notification method for notification of the parameters (e.g., signaling configuration). For example, the existing parameters "absoluteFrequencySSB," "ssb-PositionsInBurst," and "ssbSubcarrierSpacing" may be reused for the aforementioned parameters indicating the SSB frequency position, the transmitted SSB index, and the SCS of the SSB, respectively.

When IAB node 10 is configured with a plurality of SSB transmission configurations for the IAB node, the above parameters may be independently configurable for each of the SSB transmission configurations. For example, the above parameters may be independently configurable for an SSB transmission configuration related to SSB transmission from IAB node 10 to UE 20 and for an SSB transmission configuration related to SSB transmission from IAB node 10 to another IAB node 10. This is because appropriate parameters may be different between the SSB transmission configuration for SSB transmission from IAB node 10 to UE 20 and the SSB transmission configuration for SSB transmission from IAB node 10 to another IAB node 10. In a plurality of SSB transmission configurations, at least one of the above parameters may be dependent between one SSB transmission configuration and another. For example, when the SSB frequency position is common to the SSB transmission configuration for SSB transmission from IAB node 10 to UE 20 and the SSB transmission configuration for SSB transmission from IAB node 10 to another IAB node 10, the SCS of the SSB may be configured in one of the SSB transmission configurations, and configuration in the other SSB transmission configuration may be omitted.

Further, the upper limit of the number of SSB transmission configurations configurable for the frequency (or the number of carriers) used for SSB transmission for IAB nodes may be defined by the specifications of Third Generation Partnership Project (3GPP). For example, at least one of the following (A1) and (A2) may be defined.
(A1) The maximum value of the number of SSB transmission configurations configurable per the same SSB frequency is set to "2."
(A2) For the number of Component Carriers (CCs) used by IAB node 10, the maximum value of the number of SSB transmission configurations configurable per CC is set to "2."

The maximum value "2" indicated at (A1) and (A2) is one example, and the maximum value may be any value of 2 or more.

### <Details of Parameter Indicating SSB Transmission Periodicity and SSB Transmission Timing>

Next, a parameter indicating the SSB transmission periodicity and the SSB transmission timing in the SSB transmission configuration for the IAB node will be further described.

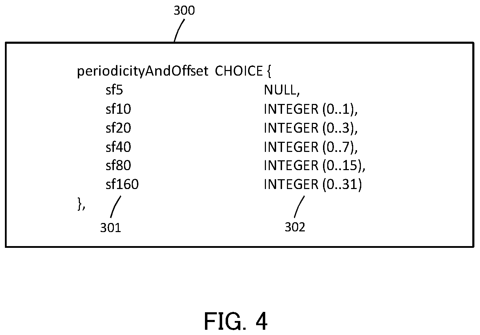

FIG. 4 illustrates one example of the parameter for collective notification of the SSB transmission periodicity and the SSB transmission timing in the SSB transmission configuration for the IAB node according to the present embodiment.

Collective notification of the SSB transmission periodicity and the SSB transmission timing for the IAB node may be performed by parameter "periodicityAndOffset" 300 for collective notification of the SSB transmission periodicity and the SSB transmission timing as illustrated in FIG. 4.

In FIG. 4, the value "sf10" of parameter 301 indicating the SSB transmission periodicity indicates the SSB transmission periodicity "10 ms." In addition, "INTEGER (0..1)" indicates that parameter 302 indicating the SSB transmission timing may take "0" or "1" as an offset for the SSB transmission timing in units of half frame. For example, when the value "sf10" of parameter 301 indicating the SSB transmission periodicity is associated with the value "0" of parameter 302 indicating the SSB transmission timing, the following is indicated. That is, the SSB is transmitted at a periodicity of "10 ms" in the 0th half frame among two half frames existing in 10 ms.

The reason why "NULL" is associated with "sf5" in FIG. 4 is that when the SSB transmission periodicity is "5 ms," the SSBs are transmitted in the respective half frames, and it is unnecessary to configure the offset in units of half frame.

Further, the values "sf5," "sf10," "sf20," and the like of parameter 301 indicating the SSB transmission periodicity in FIG. 4 can be replaced with the values "hf1," "hf2," "hf4," and the like of the parameter indicating the SSB transmission periodicity in units of half frame.

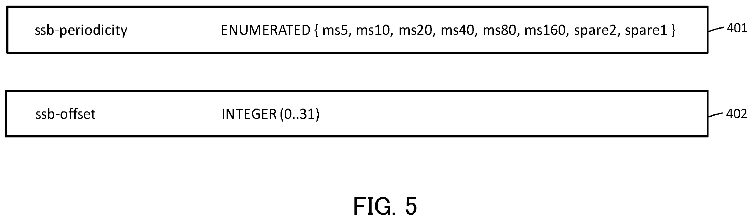

FIG. 5 illustrates one example of a parameter for separate notification of the SSB transmission periodicity and the SSB transmission timing in the SSB transmission configuration for the IAB node according to the present embodiment.

As illustrated in FIG. 5, notification of the parameter "ssb-periodicity" 401 indicating the SSB transmission periodicity and the parameter "ssb-offset" 402 indicating the SSB transmission timing may be performed separately.

In FIG. 5, the value "ms5" of parameter 401 indicating the SSB transmission periodicity indicates the SSB transmission periodicity "5 ms." In addition, "INTEGER (0..31)" indicates that parameter 402 indicating the SSB transmission timing may take any of "0" to "31" as an offset for the SSB transmission timing in units of half frame. For example, when the value of parameter 401 indicating the SSB transmission periodicity is "ms20" and the value of parameter 402 indicating the SSB transmission timing is "3," the following is indicated. That is, the SSB is transmitted at a periodicity of "20 ms" in the third half frame counting from the 0th half frame among the four half frames existing in 20 ms.

The SSB transmission periodicity for the IAB node may support a value greater than 160 ms. In this case, the range of configurable offset values for the SSB transmission timing may also be extended.

As illustrated in FIG. 4 or 5, the parameter indicating the SSB transmission timing is configurable in units of half frame, whereby the relationship with the SSB index becomes clear. Accordingly, the SSB transmission timing for the IAB node becomes clear. For example, an offset in units of half frame for SSB transmission to be performed is determined by the parameter indicating the SSB transmission timing, and an offset for the SSB transmission timing within the determined half frame is determined by the SSB index.

When the parameter indicating the SSB transmission timing of 1 ms granularity is applied instead of the above-described parameter indicating the SSB transmission timing in units of half frame, IAB node 10 may assume the following, for example. That is, IAB node 10 may assume that the IAB node is not notified, as the parameter indicating the SSB transmission timing of 1 ms granularity, of a parameter value different from the parameter in units of half frame. Alternatively, even when the IAB node is notified, as the parameter indicating the SSB transmission timing of 1 ms granularity, of a parameter value different from the parameter in units of half frame, IAB node 10 may assume such a parameter fixedly to the half frame (e.g., as the boundary of the half frame).

The half frame of 5 ms in the above description may indicate a half section of a radio frame of 10 ms. Note also that, the half frame of 5 ms may be composed of five 1 ms subframes. For example, when the radio frame is referred to as a first time period, the half frame may be a second time period different in length from the first time period. Note also that, the time length "5 ms" of the half frame is one example, and the time length of the half frame may be determined according to the time length of the radio frame.

### <Conclusion of Present Disclosure>

In the present disclosure, the IAB node includes a control section that configures a parameter related to a transmission timing for an SSB based on units of second time period, the SSB being transmitted in accordance with a transmission periodicity in the second time period different in length from a first time period, and a transmission section that transmits the configured parameter related to the transmission timing for the SSB. With this configuration, the relationship with the parameter indicating the SSB index becomes clear, and it is thus clear at which timing the SSB transmission is to be performed.

### <Hardware Configuration and/or the like>

The block diagrams used to describe the above embodiment illustrate blocks on a function-by-function basis. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or wirelessly), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

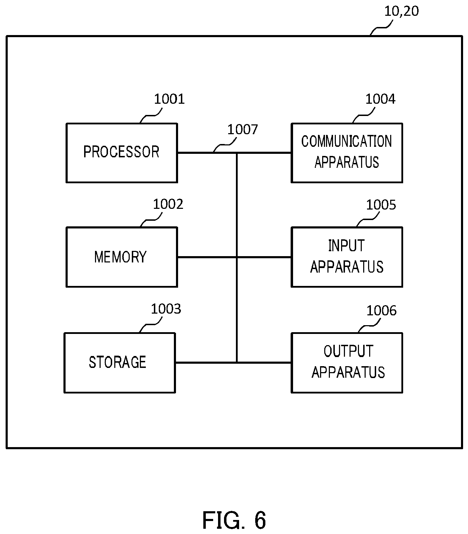

For example, the base station, user equipment, and the like according to an embodiment of the present disclosure may function as a computer that executes processing of a radio communication method of the present disclosure. FIG. 6 illustrates one example of a hardware configuration of an IAB node 10 and UE 20 according to one embodiment of the present disclosure. IAB node 10 and UE 20 described above may be physically constituted as a computer apparatus including processor 1001, memory 1002, storage 1003, communication apparatus 1004, input apparatus 1005, output apparatus 1006, bus 1007, and the like.

The term "apparatus" in the following description can be replaced with a circuit, a device, a unit, or the like. The hardware configurations of IAB node 10 and UE 20 may include one apparatus or a plurality of apparatuses illustrated in the drawings or may not include part of the apparatuses.

The functions of IAB node 10 and UE 20 are implemented by predetermined software (program) loaded into hardware, such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 100, MT 102, DU 103, and the like described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiments is used. For example, the control section of UE 20 may be implemented by a control program stored in memory 1002 and operated by processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented using one or more chips. The program may be transmitted from a network through a telecommunication line.

Memory 1002 is a computer-readable recording medium and may be composed of, for example, at least one of a Read Only Memory (ROM), an Erasable Programmable ROM (EPROM), an Electrically Erasable Programmable ROM (EEPROM), and a Random Access Memory (RAM). Memory 1002 may be called as a register, a cache, a main memory (main storage apparatus), or the like. Memory 1002 can save a program (program code), a software module, and the like that can be executed to carry out the radio communication method according to an embodiment of the present disclosure.

Storage 1003 is a computer-readable recording medium and may be composed of, for example, at least one of an optical disk such as a Compact Disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called as an auxiliary storage apparatus. The storage medium as described above may be, for example, a database, a server, or other appropriate media including at least one of memory 1002 and storage 1003.

Communication apparatus 1004 is hardware (transmission and reception device) for communication between computers through at least one of wired and wireless networks and is also called as, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, antennas and the like that IAB node 10 and UE 20 include may be realized by communication device 1004. A transmission/reception section may be implemented with a transmission section and a reception section physically or logically separated from each other.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Input apparatus 1005 and output apparatus 1006 may be integrated (for example, a touch panel).

The apparatuses, such as processor 1001, memory 1002, and the like are connected by bus 1007 for communication of information. Bus 1007 may be configured using a single bus or using buses different between each pair of the apparatuses.

Furthermore, IAB node 10 and UE 20 may include hardware, such as a microprocessor, a digital signal processor (DSP), an Application Specific Integrated Circuit (ASIC), a Programmable Logic Device (PLD), and a Field Programmable Gate Array (FPGA), and the hardware may implement part or all of the functional blocks. For example, processor 1001 may be implemented using at least one of these pieces of hardware.

### <Notification and Signaling of Information>

The notification of information is not limited to the aspects or embodiments described in the present disclosure, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, notification information (Master Information Block (MIB), and System Information Block (SIB))), and other signals. The RRC signaling may be called an RRC message and may be, for example, an RRC connection setup message, an RRC connection reconfiguration message, or the like.

### <Applied System>

The aspects and embodiments described in the present specification may be applied to at least one of a system using Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and the like>

The orders of the processing procedures, the sequences, the flow charts, and the like of the aspects and embodiments described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a user equipment in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of "Information and Signals") can be output from a higher layer (or a lower layer) to a lower layer (or a higher layer). The information, the signals, and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like of Aspects>

The aspects and embodiments described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiments described in the present disclosure. Modifications and variations of the aspects of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., a coaxial cable, an optical fiber cable, a twisted pair, and a digital subscriber line (DSL)) and a wireless technique (e.g., an infrared ray and a microwave), the at least one of the wired technique and the wireless technique is included in the definition of the transmission medium.

### <Information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

The terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <"System" and "Network">

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulas and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point, "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Station>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. At least one of the base station and the mobile station may be a device mounted in a mobile entity, the mobile entity itself, or the like. The mobile entity may be a vehicle (e.g., an automobile or an airplane), an unmanned mobile entity (e.g., a drone or an autonomous vehicle), or a robot (a manned-type or unmanned-type robot). At least one of the base station and the mobile station also includes an apparatus that does not necessarily move during communication operation. For example, at least one of the base station and the mobile station may be Internet-of-Things (IoT) equipment such as a sensor.

The base station in the present disclosure may also be replaced with the user equipment. For example, the aspects and the embodiments of the present disclosure may find application in a configuration that results from replacing communication between the base station and the user equipment with communication between multiple user equipments (such communication may, e.g., be referred to as device-to-device (D2D), vehicle-to-everything (V2X), or the like). In this case, user equipment 20 may be configured to have the functions that the base station described above has. The wordings "uplink" and "downlink" may be replaced with a corresponding wording for inter-equipment communication (for example, "side"). For example, an uplink channel, a downlink channel, and the like may be replaced with a side channel. Similarly, the user equipment in the present disclosure may be replaced with the base station. In this case, the base station is configured to have the functions that user equipment 20 described above has.

### <Meaning and Interpretation of Terms>

As used herein, the term "determining" may encompass a wide variety of actions. For example, "determining" may be regarded as judging, calculating, computing, processing, deriving, investigating, looking up, searching (or, search or inquiry)(e.g., looking up in a table, a database or another data structure), ascertaining and the like. Furthermore, "determining" may be regarded as receiving (for example, receiving information), transmitting (for example, transmitting information), inputting, outputting, accessing (for example, accessing data in a memory) and the like. Also, "determining" may be regarded as resolving, selecting, choosing, establishing, comparing and the like. That is, "determining" may be regarded as a certain type of action related to determining. Also, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like hat are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain.

The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. A unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (a frequency bandwidth, a transmit power, and the like that are used in each user equipment) on a TTI-by-TTI basis to each user equipment. The definition of TTI is not limited to this.

The TTI may be a time unit for transmitting a channel-coded data packet (a transport block), a code block, or a codeword, or may be a unit for processing such as scheduling and link adaptation. When the TTI is assigned, a time period (for example, the number of symbols) to which the transport block, the code block, the codeword, or the like is actually mapped may be shorter than the TTI.

In a case where one slot or one mini-slot is referred to as the TTI, one or more TTIs (that is, one or more slots, or one or more mini-slots) may be a minimum time unit for the scheduling. Furthermore, the number of slots (the number of mini-slots) that make up the minimum time unit for the scheduling may be controlled.

A TTI that has a time length of 1 ms may be referred to as a usual TTI (a TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or a fractional TTI), a shortened subframe, a short subframe, a mini-slot, a subslot, a slot, or the like.

The long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be identical regardless of the numerology, and may be 12, for example. The number of subcarriers that are included in the RB may be determined based on the numerology.

In addition, the RB may include one symbol or a plurality of symbols in the time domain, and may have a length of one slot, one mini slot, one subframe, or one TTI. One TTI and one subframe may be constituted by one resource block or a plurality of resource blocks.

One or more RBs may be referred to as a Physical Resource Block (PRB), a SubCarrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. Here, the common RBs may be identified by RB indices that use a common reference point of the carrier as a reference. The PRB may be defined by a certain BWP and may be numbered within the BWP. The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP The terms "cell," "carrier," and the like in the present disclosure may be replaced with "BWP."

Structures of the radio frame, the subframe, the slot, the mini-slot, the symbol, and the like are described merely as examples. For example, the configuration such as the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Article>

In a case where articles, such as "a," "an," and "the" in English, for example, are added in the present disclosure by translation, nouns following these articles may have the same meaning as used in the plural.

### <"Different">

In the present disclosure, the expression "A and B are different" may mean that "A and B are different from each other." The expression may also mean that "A and B are different from C." The expressions "separated" and "coupled" may also be interpreted in the same manner as the expression "A and B are different."

### Industrial Applicability

One aspect of the present disclosure is useful for radio communication systems.

### Reference Signs List

10, 10A, 10B, 10C IAB node
20 UE, User terminal
100 Control section
102 MT
103 DU

## Claims

1. A radio node, comprising:
a control section that configures a parameter related to a transmission timing for a synchronization signal block based on units of second time period, the synchronization signal block being transmitted in accordance with a transmission periodicity in the second time period different in length from a first time period; and
a transmission section that transmits the parameter configured.

2. The radio node according to claim 1, wherein
the transmission section transmits a signal including the parameter being a first parameter and a second parameter related to the transmission periodicity.

3. The radio node according to claim 1, wherein
the transmission section transmits a signal including the parameter being a first parameter, and at least one of a second parameter related to the transmission periodicity, a third parameter related to an index of the synchronization signal block transmitted, a fourth parameter related to a frequency used for transmission of the synchronization signal block, and a fifth parameter related to a subcarrier spacing of the synchronization signal block.

4. The radio node according to claim 3, wherein
the control section configures the signal for a terminal and the signal for another radio node, separately.

5. The radio node according to claim 3, wherein
the fourth parameter defines a number that is configurable per frequency.

6. A radio communication control method, comprising the following performed by a radio node:
configuring a parameter related to a transmission timing for a synchronization signal block based on units of second time period, the synchronization signal block being transmitted in accordance with a transmission periodicity in the second time period different in length from a first time period; and
transmitting the parameter configured.
